# EUROPÄISCHE PATENTANMELDUNG

(11) **EP 1 776 852 A1**
(43) Veröffentlichungstag der Anmeldung: **25.04.2007**
(21) Anmeldenummer: 06021485.5
(22) Anmeldetag: 13.10.2006
(51) Int. Cl.: A01B 69/02

(54) **Spuranreißer für eine landwirtschaftliche Maschine**

(30) Priorität: 19.10.2005 DE 102005049940
(71) Anmelder: Amazonen-Werke H. Dreyer GmbH & Co. KG, 49205 Hasbergen (DE)
(72) Erfinder: Pokriefke, Michael, 27798 Hude (DE); Steen, Rüdiger, 27798 Hude (DE); Hoffmann, Karl-Peter, 27798 Hude (DE)

(57) **Zusammenfassung**

Spuranreißer für eine landwirtschaftliche Maschine, der im Seitenbereich der Maschine mittels zumindest eines Stellelementes ein und ausschwenkbar an Rahmenteilen der Maschine angeordnet ist, wobei zwischen dem Spuranreißer und dem Rahmenteil ein verschenkbarer Zwischenhebel angeordnet ist, wobei zwischen dem Spuranreißer und dem Zwischenhebel ein erstes motorisches Stellelement angeordnet ist. Um ein stufenweises Einschwenken und Ausschwenken des Spuranreißers in einfacher Weise in vorgegebener Weise zu ermöglichen, ist vorgesehen dass zwischen dem Zwischenhebel und dem Rahmenteil ein weiteres motorisches Stellelement angeordnet ist.

## Beschreibung

Die Erfindung betrifft einen Spuranreißer für eine landwirtschaftliche Maschine gemäß des Oberbegriffes des Patentanspruches 1.

Ein derartiger Spuranreißer ist beispielsweise durch die DE 196 34 934 A1 bekannt. Dieser Spuranreißer ist im Seitenbereich der Maschine angeordnet und mittels eines zwischen dem Spuranreißer und dem Zwischenhebel angeordneten Hydraulikzylinders aus der Arbeitsposition in eine zumindest annähernd senkrechte Position anzuheben. Dieses Anheben ist erforderlich, wenn der Spuranreißer in wechselseitiger Weise zu dem auf der anderen Seite der Maschine angeordneten Spuranreißer angehoben oder abgesenkt werden soll. Auch ist das Anheben des Spuranreißers erforderlich, wenn die Maschine an Hindernissen vorbei passieren muss. Nachteilig ist jedoch, wenn der Spuranreißer angehoben werden muss, um z.B. unter Bäumen hindurch zu fahren, dass der Spuranreißer nur senkrecht und nicht weiter einzuklappen ist. Um den Spuranreißer weiter einzuklappen, ist es erforderlich, dass das einschwenkbare Seitenteil mit eingeklappt wird, weil das weitere Stellelement, welches zwischen dem Zwischenhebel und dem Rahmen angeordnet ist, lediglich als längeneinstellbare Lenkerstange ausgebildet ist, und die weitere Einklappbewegung über die Kopplung dieses Stellelementes mit dem Einschwenkgestänge erfolgt. Über das Einschwenkgestänge wird der Zwischenhebel über die Lenkerstange mit dem Spuranreißer eingeschwenkt.

Der Erfindung liegt die Aufgabe zugrunde, ein stufenweises Einschwenken und Ausschwenken des Spuranreißers in einfacher Weise in vorgegebener Weise zu ermöglichen.

Diese Aufgabe wird erfindungsgemäß durch das kennzeichnende Merkmal des Patentanspruches 1 gelöst. Infolge dieser Maßnahme kann über das zweite motorische Stellelement, welches zwischen dem Zwischenhebel und dem Rahmenteil angeordnet ist, der Spuranreißer durch dieses motorische Einstellelement aus der senkrechten Stellung in eine liegende Stellung eingeschwenkt werden. Hierdurch ist es möglich, dass die Maschine in Arbeitsposition mit völlig eingeklapptem Spuranreißer unter Bäumen hindurch gefahren werden kann, so dass die Ausbringarbeit der Maschine nicht unterbrochen werden muss.

Eine robuste Ausgestaltung der Stellelemente wird dadurch erreicht, dass die motorischen Stellelemente als doppelt wirkende Hydraulikzylinder ausgebildet sind.

Eine vorteilhafte Hydraulikschaltung um den Spuranreißer stufenweise einklappen zu können, wird dadurch verwirklicht, dass von jedem Hydraulikzylinder ein Hydraulikventil derart betätigbar ist, dass am Ende des Ausfahrens des zwischen dem Rahmenteil und dem Zwischenhebel angeordneten Hydraulikzylinders von dem Zwischenhebel und/oder dem Hydraulikzylinder ein erstes Hydraulikventil umgeschaltet wird, so dass der zwischen dem Spuranreißer und dem Zwischenhebel angeordnete Hydraulikzylinder ausfährt und hierbei zu Beginn seines Ausfahrens ein weiteres Ventilumgeschaltet wird, so dass das Einfahren des zwischen dem Rahmenteil und dem Zwischenhebel angeordneten Hydraulikzylinders verhindert wird, dass am Ende des Einfahrens des zwischen dem Spuranreißer und dem Zwischenhebel angeordneten Hydraulikzylinders das weitere Hydraulikventil umgeschaltet wird, so dass der zwischen dem Rahmenteil und dem Zwischenhebel angeordnete Hydraulikzylinder eingefahren werden kann, dass zu Beginn des Einfahrens des zwischen dem Rahmenteil und den Zwischenhebel angeordneten Hydraulikzylinders das erste Ventil umgeschaltet wird, so dass das Ausfahren des zwischen dem Spuranreißers und Zwischenhebels angeordneten Hydraulikzylinders verhindert wird.

Weitere Einzelheiten der Erfindung sind der Beispielsbeschreibung und den Zeichnungen zu entnehmen. Hierbei zeigen
- Fig. 1: die an dem Scharträger angeordneten Spuranreißer in der Ansicht von hinten, wobei der linke Spuranreißer in Anreißstellung und der rechte Spuranreißer in angehobenem Zustand sich befindet und in Prinzipdarstellung,
- Fig. 2: die an dem Scharträger angeordneten Spuranreißer in der Ansicht von hinten, wobei der rechts Spuranreißer in Anreißstellung und der links Spuranreißer in angehobenem Zustand sich befindet und in Prinzipdarstellung,
- Fig. 3: die an dem Scharträger angeordneten Spuranreißer in der Ansicht von hinten, wobei der linke Spuranreißer ganz eingeklappt ist und der rechte Spuranreißer in Außerbetriebsstellung ist und in Prinzipdarstellung,
- Fig. 4: die an dem Scharträger angeordneten Spuranreißer in der Ansicht von hinten, wobei beide Spuranreißer ganz eingeklappt sind und in Prinzipdarstellung,
- Fig. 5: der in Transportstellung angehobene Scharbalken mit eingeklappten Spuranreißern in der Ansicht von hinten und in Prinzipdarstellung,
- Fig. 6: den linken Spuranreißer in Anreißstellung in der Ansicht von hinten und in vergrößertem Maßstab und in Prinzipdarstellung,
- Fig. 7: der Spuranreißer in Außerbetriebsstellung in der Ansicht von hinten in Außerbetriebsstellung und in Prinzipdarstellung,
- Fig. 8: der Spuranreißer in ganz eingeklappter Stellung in vergrößertem Maßstab in der Ansicht von hinten und in Prinzipdarstellung und
- Fig. 9: den Hydraulikschaltplan für die den Spuranreißer zugeordneten Hydraulikzylindern, wobei die Spuranreißer entsprechend Fig. 4, 5 und 8 eingeklappt sind und kein Spuranreißer zur Betätigung vorgewählt ist.

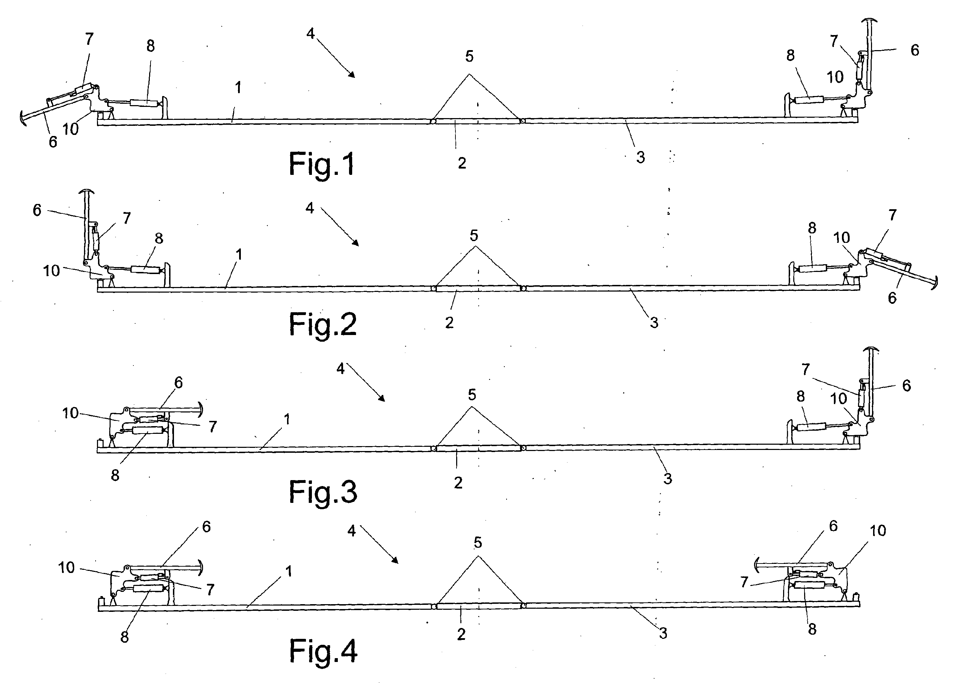

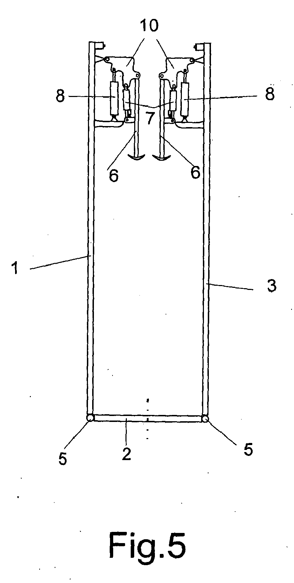

In den Fig. 1 bis 5 ist in schematischer Weise ein aus drei Segmenten 1, 2, 3 bestehender Auslegerbalken 4 dargestellt, der in nicht dargestellter Weise an dem Rahmen einer landwirtschaftlichen Maschine angeordnet ist. An dem Auslegerbalken sind in nicht dargestellter Weise Bodenbearbeitungswerkzeuge oder Säschare angeordnet. Die Außensegmente 1 und 3 des Auslegerbalkens 4 sind jeweils an dem Mittelbalken 2 mittels Gelenke 5 aus der in Fig. 1 dargestellten Arbeitsstellung in die in Fig. 5 dargestellte Transportstellung zu verschwenken. Im Seitenbereich der Seitensegmente 1 und 3 des Auslegerbalkens 4 ist jeweils ein Spuranreißer 6, der mittels motorisch Stellelementen 7 und 8 ein- und ausschwenkbar angeordnet ist. Der Spuranreißer 6 ist mittels des Gelenkes 9 an dem Zwischenhebel 10 angelenkt. Zwischen dem Zwischenhebel 10 und dem Spuranreißer 6 ist der doppeltwirkende Hydraulikzylinder 7 angeordnet. Der Zwischenhebel 10 ist mittels des Gelenkes 11 an dem als Auslegerbalken 4 ausgebildeten Rahmenteil der Maschine des ein- und ausschwenkbar befestigt. Zwischen dem Zwischenhebel 10 und dem als Auslegerbalken 4 ausgebildeten Rahmenteil ist der als motorisches Stellelement ausgebildete doppeltwirkende Hydraulikzylinder 8 angeordnet.

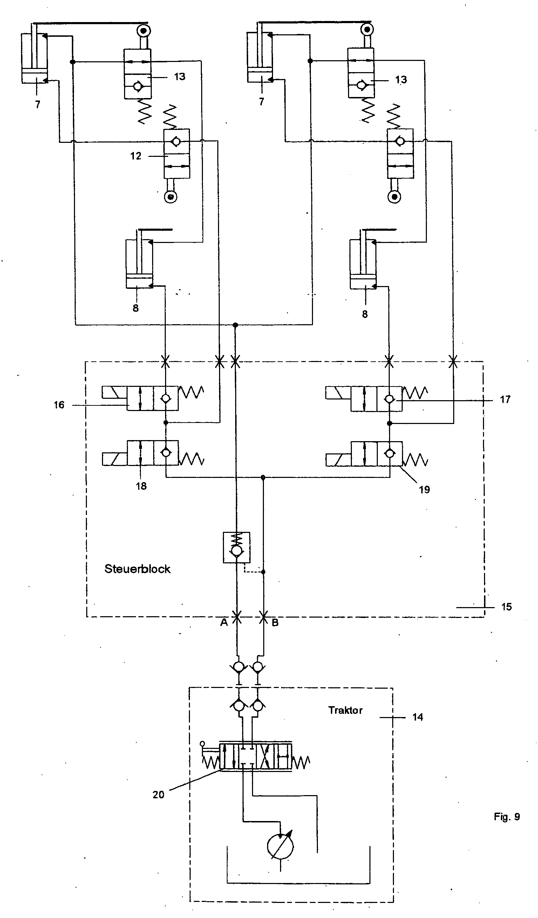

Zwischen dem Zwischenhebel 10 und dem Auslegerbalken 4 ist ein erstes Hydraulikventil 12 und zwischen dem Spuranreißer 6 und dem Hydraulikzylinder 7 bzw. dem Zwischenhebel 10 ist ein zweites Hydraulikventil 13, deren Funktion und Wirkungsweise weiter unten beschrieben wird und in Fig. 9 dargestellt ist, angeordnet. Die Verschaltung der Hydraulikzylinder 7, 8 und der Ventile 12, 13 ist in Fig. 9 dargestellt, wobei zwischen der Schlepperhydraulikanlage 14 und den Spuranreißern 6 und den Spuranreißern 6 zugeordneten Ventilen 12, 13 ein Steuerblock 15 mit weiteren Ventilen 16, 17, 18, 19 angeordnet ist, über welche vorzuwählen ist, ob der linke oder rechte Spuranreißer 6 ausgefahren oder jeweils eingefahren werden soll. Das Ein- und Ausklappen der Spuranreißer 6 über die Hydraulikzylinder 7, 8 erfolgt durch das Schleppersteuerventil 20.

Die Funktionsweise ist folgende:

Wenn die Maschine sich in Transportstellung gemäß Fig. 5 befindet, wird, um die Maschine in Arbeitsstellung auf dem Feld zu bringen, durch nicht dargestellte Hydraulikzylinder die sich in senkrechter Stellung befindlichen Segmente 1, 3 des Auslegerbalkens 4 aus der in Fig. 5 dargestellten Transportstellung zunächst in die in Fig. 4 dargestellte Arbeitsstellung geschwenkt. Die Fig. 9 zeigt die Situation der Spuranreißer im eingeklappten Zustand gemäß Fig. 4 bzw.

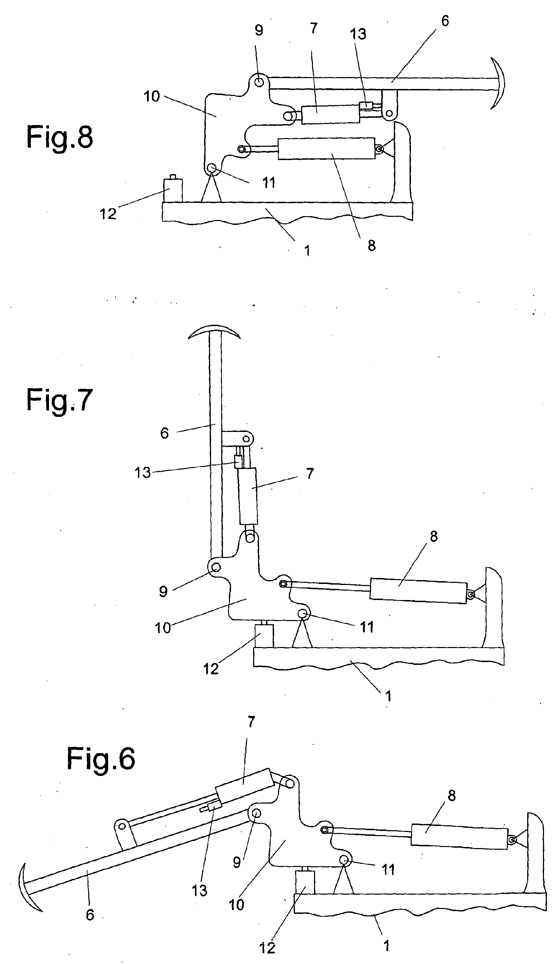

Fig. 8. Hierbei sind die beiden Hydraulikzylinder 7, 8, die jedem Spuranreißer 6 zugeordnet sind, eingefahren, wobei das erste den Spuranreißern 6 zugeordnete Ventil 12 nicht betätigt ist, während das zweite den Spuranreißern 6 zugeordnete Ventil 13 betätigt ist, wie Fig. 8 und Fig. 9 zeigen. Wenn die Spuranreißer 6 aus den in Fig. 4 dargestellten Positionen gemäß Fig. 8 in die in Fig. 1 und/oder 2 dargestellte Arbeitsposition gemäß Fig. 6 gebracht werden soll, d.h. dass der eine Spuranreißer 6 ganz ausgeklappt ist und sich in Anreißerstellung gemäß Fig. 6 befindet, während der andere Spuranreißer 6 um 90° gemäß fig. 7 ein- bzw. ausgeklappt ist, sich also in senkrechter Stellung gemäß Fig. 7 befindet wird, aufgrund der Hydraulikverschaltung gemäß Fig. 9 zunächst über den zwischen dem Ausleger 4 und dem Zwischenhebel 10 angeordneten Hydraulikzylinder der Zwischenhebel mit dem Spuranreißer in die senkrechte Stellung gemäß Fig. 7 bewegt. Wenn der Zwischenhebel 10 mit dem Spuranreißer 6 seine Endposition erreicht hat, wird das erste Ventil 12 betätigt. Dann wird über den zwischen dem Zwischenhebel 10 und dem Spuranreißer 6 angeordneten Hydraulikzylinder 7, der entsprechend dem Ventil 18 oder 19 vorgewählte Schaltrhythmus, der zwischen dem Zwischenhebel 10 und dem Spuranreißer 6 angeordnete Hydraulikzylinder 7 betätigt, so dass der entsprechende Spuranreißer 6 aus der Senkrechten in die Anreißerposition fährt, wie in Fig. 6 dargestellt ist. Wenn das Ventil 18 betätigt ist, fährt der linke Spuranreißer 6 in die in Fig. 6 dargestellte Position, wenn das Ventil 19 betätigt ist, fährt der rechte Spuranreißer aus der in Fig. 7 dargestellten Außerbetriebsstellung in die Fig. 6 dargestellte Betriebsstellung. Wenn der Spuranreißer 6 über den Hydraulikzylinder 7 ausfährt, wird das zwischen dem Spuranreißer 6 und dem Hydraulikzylinder der dem Zwischenhebel 10 angeordnete Ventil 13 umgeschaltet.

Wenn der Spuranreißer 6 aus der in Fig. 6 dargestellten Position in die in Fig. 7 dargestellte Position gebracht werden soll, wird entsprechend das Ventil 16 oder 17 umgeschaltet, so dass dann zunächst der zwischen dem Spuranreißer 6 und Zwischenhebel 10 angeordnete Hydraulikzylinder 7 mit Druck beaufschlagt wird, so dass er einfährt, um den Spuranreißer 6 aus der in Fig. 6 in die in Fig. 7 dargestellte Position zu bringen. Durch entsprechendes Umschalten der Ventile 16, und 19 kann also somit in einem ersten Schritt der Spuranreißer 6 aus der Anreißerposition gemäß Fig. 6 in die in Fig. 7 dargestellte Außerbetriebsposition oder umgedreht.

Falls der Spuranreißer aus der in Fig. 7 dargestellte Außerbetriebsposition in die in Fig. 8 dargestellte eingeklappte Position, gebracht werden soll, wird durch die Ventile 16 und 17 im Steuerblock 15 vorgewählt.

Somit wird also von jedem Hydraulikzylinder 7, 8 ein Hydraulikventil 12, 13derartig betätigt, dass am Ende des Ausfahrens des zwischen dem Rahmenteil 4 und dem Zwischenhebel 10 angeordneten Hydraulikzylinders 8 von dem Zwischenhebel 10 und/oder dem Hydraulikzylinder 8 ein erstes Hydraulikventil 12 umgeschaltet wird, so dass der zwischen dem Spuranreißer 6 und dem Zwischenhebel 10 angeordnete Hydraulikzylinder 7 ausfährt und hierbei zu Beginn seines Ausfahrens ein weiteres Ventil 13 umgeschaltet wird, so dass beim-Einfahren des zwischen dem Rahmenteil 4 und dem Zwischenhebel 10 angeordnete Hydraulikzylinders 8 verhindert wird, dass am Ende des Einfahrens des zwischen dem Spuranreißer 6 und dem Zwischenhebel 10 angeordneten Hydraulikzylinders 7 das weitere Hydraulikventil 13 umgeschaltet wird, so dass der zwischen dem Rahmenteil4 und dem Zwischenhebel 10 angeordnete Hydraulikzylinder 8 eingefahren werden kann, und dass zu Beginn des Einfahrens des zwischen dem Rahmenteil 4 und dem Zwischenhebel 10 angeordneten Hydraulikzylinders 8 das erste Ventil 12 umgeschaltet wird, so dass das Ausfahren des zwischen dem Spuranreißer 6 und dem Zwischenhebel 10 angeordneten Hydraulikzylinders 7 verhindert wird.

Durch die Möglichkeit der stufenweisen Betätigung der Hydraulikzylinder 7, 8 und des stufenweisen Einklappens und des Ausklappens des Spuranreißers 6 ist es möglich, z.B. wenn der jeweilige Spuranreißer 6 sich in der Fig. 1 und 6 dargestellten Position befinden und der linke Spuranreißer gemäß Fig. 1 und 6 an und unter einem Baum mit dem äußeren Ende des Auslegerbalkens gearbeitete werden muss, kann der Spuranreißer 6 aus der in Fig. 6 dargestellten Position entsprechend Fig. 1 in die in Fig. 3 und 8 dargestellte Position ganz eingeklappt werden, wie Fig. 3 beispielshaft zeigt, in dem durch Betätigen des Schlepperventils 20 und des Ventils 16 ganz eingefahren werden kann.

## Patentansprüche

1. Spuranreißer für eine landwirtschaftliche Maschine, der im Seitenbereich der Maschine mittels zumindest eines Stellelementes ein und ausschwenkbar an Rahmenteilen der Maschine angeordnet ist, wobei zwischen dem Spuranreißer und dem Rahmenteil ein verschenkbarer Zwischenhebel angeordnet ist, wobei zwischen dem Spuranreißer und dem Zwischenhebel ein erstes motorisches Stellelement angeordnet ist, **dadurch gekennzeichnet ist, dass** zwischen dem Zwischenhebel (10) und dem Rahmenteil (4) ein weiteres motorisches Stellelement (8) angeordnet ist.

2. Spuranreißer nach Anspruch 1, **dadurch gekennzeichnet, dass** die motorischen Stellelemente als doppelt wirkende Hydraulikzylinder (7,8) ausgebildet sind.

3. Spuranreißer nach Anspruch 2, wobei die Hydraulikzylinder mittels einer Hydraulikanlage hydraulisch betätigbar sind, **dadurch gekennzeichnet, dass** von jedem Hydraulikzylinder (7,8) ein Hydraulikventil (12,13) derart betätigbar ist, dass am Ende des Ausfahrens des zwischen dem Rahmenteil (4) und dem Zwischenhebel angeordneten Hydraulikzylinders (8) von dem Zwischenhebel (10) und/oder dem Hydraulikzylinder (8) ein erstes Hydraulikventil (12) umgeschaltet wird, so dass der zwischen dem Spuranreißer (6) und dem Zwischenhebel (10) angeordnete Hydraulikzylinder (7) ausfährt und hierbei zu Beginn seines Ausfahrens ein weiteres Ventil (13) umgeschaltet wird, so dass das Einfahren des zwischen dem Rahmenteil (4) und dem Zwischenhebel (10) angeordneten Hydraulikzylinders (8) verhindert wird, dass am Ende des Einfahrens des zwischen dem Spuranreißer (6) und dem Zwischenhebel (10) angeordneten Hydraulikzylinders (7)das weitere Hydraulikventil (13) umgeschaltet wird, so dass der zwischen dem Rahmenteil (4) und dem Zwischenhebel (10) angeordnete Hydraulikzylinder (8) eingefahren werden kann, dass zu Beginn des Einfahrens des zwischen dem Rahmenteil (4) und den Zwischenhebel (10) angeordneten Hydraulikzylinders (8) das erste Ventil (12) umgeschaltet wird, so dass das Ausfahren des zwischen dem Spuranreißers (6) und Zwischenhebels (10) angeordneten Hydraulikzylinders (7) verhindert wird.
